# EUROPEAN PATENT APPLICATION

(11) **EP 3 133 480 A1**
(43) Date of publication of application: **22.02.2017**
(21) Application number: 15806885.8
(22) Date of filing: 12.02.2015
(51) Int. Cl.: G06F 3/0486

(54) **METHOD FOR INITIATING COMMUNICATION AND TERMINAL DEVICE**

(30) Priority: 11.06.2014 CN 201410258824
(71) Applicant: Huawei Technologies Co., Ltd., Shenzhen, Guangdong 518129 (CN)
(72) Inventor: ZHANG, Xian, Shenzhen Guangdong 518129 (CN); CAO, Leilei, Shenzhen Guangdong 518129 (CN); CHENG, Cheng, Shenzhen Guangdong 518129 (CN)
(74) Representative: Epping - Hermann - Fischer
(86) International application number: PCT/CN2015/072869
(87) International publication number: WO 2015/188636

(57) **Abstract**

Embodiments of the present invention provide a communication initiation method and a terminal device, including: detecting a dragging path formed when a user touches a display interface of the terminal device and drags a touch point; determining a target communication object and a target communication manner according to the dragging path; and initiating communication to the target communication object by using the target communication manner. Using the foregoing technical solution, the user can complete a communication activity by means of continuous input at a time, thereby reducing operation costs of the user and improving use efficiency. According to the foregoing technical solution, the user can rapidly and conveniently initiate a communication process.

## Description

### CROSS-REFERENCE TO RELATED APPLICATIONS

This application claims priority to Chinese Patent Application No. 201410258824.9, filed with the Chinese Patent Office on June 11, 2014 and entitled "COMMUNICATION INITIATION METHOD AND TERMINAL DEVICE", which is incorporated herein by reference in its entirety.

### TECHNICAL FIELD

Embodiments of the present invention relate to the field of information technologies, and more specifically, to a communication initiation method and a terminal device.

### BACKGROUND

As technologies develop, carriers of communication have changed from traditional letters to various electronic terminal devices, such as a mobile phone, a tablet computer, and a computer. A communication activity generally includes three basic modules: a communication object, a communication event, and a communication manner. The communication object may be termed a contact and is an object with whom a user intends to communicate. The communication manner refers to a manner in which the user communicates with the communication object, for example, a voice call, a video call, an SMS message, or an email. The communication event may be termed a communication history and refers to a historical record of the communication between the user and the communication object.

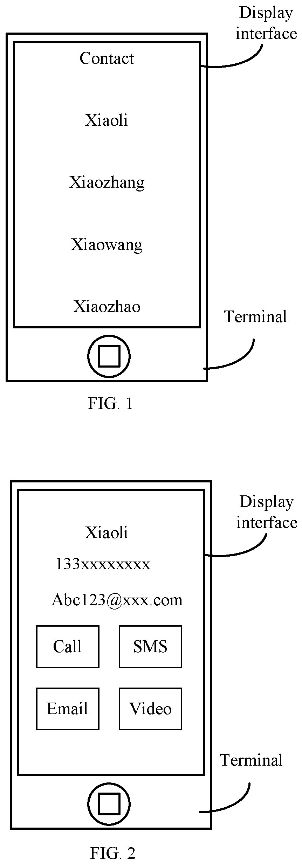

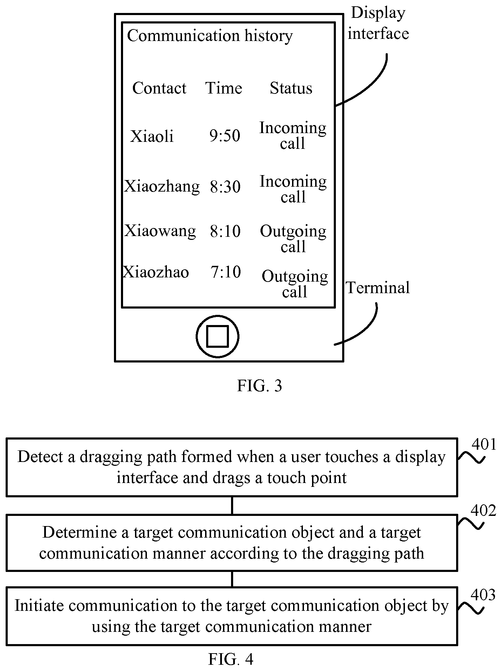

In the prior art, the communication object, the communication event, and the communication manner are separate. FIG. 1 is a schematic diagram of a communication object in the prior art. FIG. 2 is a schematic diagram of a communication manner in the prior art. In the prior art, a display interface of a terminal device presents a communication object list. After a user selects one communication object from the communication object list, the display interface of the terminal device presents a communication manner list and the user selects one communication manner from the communication manner list to initiate a communication process to the communication object. For example, after the user selects "Xiaoli" from a communication object list shown in FIG. 1, the display interface of the terminal device presents a communication manner list shown in FIG. 2. The user may select one communication manner from the communication manner list to initiate communication. For example, if the user selects "Call" from the communication manner list, the user may make a call to "Xiaoli". In addition, a communication event list is generally provided in the prior art. The user may view a historical record of communication from the communication event list, where the historical record may be a historical record of a call or may be a historical record of another communication event (such as an SMS message or an email). A communication event list shown in FIG. 3 is an example in which communication events are historical records of calls. As shown in FIG. 3, "Xiaoli 9:50 Incoming call" indicates that the communication object Xiaoli made a call to the user at 9:50. After the user selects one communication event from the communication event list, the display interface of the terminal device may jump to the communication manner list. For example, if the user selects the first record "Xiaoli 9:50 Incoming call" from the communication event list shown in FIG. 3, the display interface of the terminal device may present the communication manner list shown in FIG. 2. Then, the user may select one communication manner to communicate with the communication object "Xiaoli". One communication event is generally corresponding to one communication object. For example, the communication object corresponding to the first record "Xiaoli 9:50 Incoming call" on the communication event list shown in FIG. 3 is "Xiaoli".

Apparently, the three items, the communication object, the communication manner, and the communication event, are separated in the prior art. To complete initiation of a communication process, the user needs to perform at least two steps. From the user's perspective, a complete communication activity is split.

### SUMMARY

Embodiments of the present invention provide a communication initiation method and a terminal device that can improve efficiency of communication initiation by a user.

According to a first aspect, an embodiment of the present invention provides a communication initiation method, where the method is applied to a terminal device and the method includes: detecting a dragging path formed when a user touches a display interface of the terminal device and drags a touch point; determining a target communication object and a target communication manner according to the dragging path; and initiating communication to the target communication object by using the target communication manner.

With reference to the first aspect, in a first possible implementation manner of the first aspect, the determining a target communication object and a target communication manner according to the dragging path includes: determining a first endpoint and a second endpoint of the dragging path; and determining the target communication object and the target communication manner according to the first endpoint and the second endpoint.

With reference to the first possible implementation manner of the first aspect, in a second possible implementation manner of the first aspect, a communication manner list and at least one of a communication object list and a communication event list are displayed on the display interface.

With reference to the second possible implementation manner of the first aspect, in a third possible implementation manner of the first aspect, if the communication object list and the communication manner list are displayed on the display interface, the determining the target communication object and the target communication manner according to the first endpoint and the second endpoint includes: when the first endpoint is corresponding to one communication object on the communication object list and the second endpoint is corresponding to one communication manner on the communication manner list, determining that the communication object corresponding to the first endpoint is the target communication object and determining that the communication manner corresponding to the second endpoint is the target communication manner.

With reference to the second possible implementation manner of the first aspect, in a fourth possible implementation manner of the first aspect, if the communication event list and the communication manner list are displayed on the display interface, the determining the target communication object and the target communication manner according to the first endpoint and the second endpoint includes: when the first endpoint is corresponding to one communication event on the communication event list and the second endpoint is corresponding to one communication manner on the communication manner list, determining that a communication object corresponding to the communication event that is corresponding to the first endpoint is the target communication object and determining that the communication manner corresponding to the second endpoint is the target communication manner.

With reference to the first possible implementation manner of the first aspect, in a fifth possible implementation manner of the first aspect, at least one of a communication object list and a communication event list is displayed on the display interface.

With reference to the second possible implementation manner of the first aspect or the fifth possible implementation manner of the first aspect, in a sixth possible implementation manner of the first aspect, if the communication object list is displayed on the display interface, the determining the target communication object and the target communication manner according to the first endpoint and the second endpoint includes: when the first endpoint is corresponding to one communication object on the communication object list and the second endpoint is corresponding to another communication object on the communication object list, determining that the communication object corresponding to the first endpoint is the target communication object and determining that a first default communication manner is the target communication manner.

With reference to the second possible implementation manner of the first aspect or the fifth possible implementation manner of the first aspect, in a seventh possible implementation manner of the first aspect, if the communication event list is displayed on the display interface, the determining the target communication object and the target communication manner according to the first endpoint and the second endpoint includes: when the first endpoint is corresponding to one communication event on the communication event list and the second endpoint is corresponding to another communication event on the communication event list, determining that a communication object corresponding to the communication event that is corresponding to the first endpoint is the target communication object and determining that a second default communication manner is the target communication manner.

With reference to the second possible implementation manner of the first aspect or the fifth possible implementation manner of the first aspect, in an eighth possible implementation manner of the first aspect, if the communication object list and the communication event list are displayed on the display interface, the determining the target communication object and the target communication manner according to the first endpoint and the second endpoint includes: when the first endpoint is corresponding to one communication object on the communication object list and the second endpoint is corresponding to one communication event on the communication event list, determining that the communication object corresponding to the first endpoint is the target communication object and determining that a third default communication manner is the target communication manner, or determining that a communication object corresponding to the communication event that is corresponding to the second endpoint is the target communication object and determining that a fourth default communication manner is the target communication manner.

According to a second aspect, an embodiment of the present invention provides a terminal device, where the terminal device includes: a display unit, configured to present a display interface; a detecting unit, configured to detect a dragging path formed when a user touches the display interface and drags a touch point; a determining unit, configured to determine a target communication object and a target communication manner according to the dragging path; and a communication unit, configured to initiate communication to the target communication object by using the target communication manner.

With reference to the second aspect, in a first possible implementation manner of the second aspect, the determining unit is specifically configured to determine a first endpoint and a second endpoint of the dragging path and determine the target communication object and the target communication manner according to the first endpoint and the second endpoint.

With reference to the first possible implementation manner of the second aspect, in a second possible implementation manner of the second aspect, the display unit is specifically configured to display a communication manner list and at least one of a communication object list and a communication event list on the display interface.

With reference to the second possible implementation manner of the second aspect, in a third possible implementation manner of the second aspect, if the communication object list and the communication manner list are displayed by the display unit, the determining unit is specifically configured to: when the first endpoint is corresponding to one communication object on the communication object list and the second endpoint is corresponding to one communication manner on the communication manner list, determine that the communication object corresponding to the first endpoint is the target communication object and determine that the communication manner corresponding to the second endpoint is the target communication manner.

With reference to the second possible implementation manner of the second aspect, in a fourth possible implementation manner of the second aspect, if the communication event list and the communication manner list are displayed by the display unit, the determining unit is specifically configured to: when the first endpoint is corresponding to one communication event on the communication event list and the second endpoint is corresponding to one communication manner on the communication manner list, determine that a communication object corresponding to the communication event that is corresponding to the first endpoint is the target communication object and determine that the communication manner corresponding to the second endpoint is the target communication manner.

With reference to the first possible implementation manner of the second aspect, in a fifth possible implementation manner of the second aspect, the display unit is specifically configured to display at least one of a communication object list and a communication event list on the display interface.

With reference to the second possible implementation manner of the second aspect or the fifth possible implementation manner of the second aspect, in a sixth possible implementation manner of the second aspect, if the communication object list is displayed by the display unit, the determining unit is specifically configured to: when the first endpoint is corresponding to one communication object on the communication object list and the second endpoint is corresponding to another communication object on the communication object list, determine that the communication object corresponding to the first endpoint is the target communication object and determine that a first default communication manner is the target communication manner.

With reference to the second possible implementation manner of the second aspect or the fifth possible implementation manner of the second aspect, in a seventh possible implementation manner of the second aspect, if the communication event list is displayed by the display unit, the determining unit is specifically configured to: when the first endpoint is corresponding to one communication event on the communication event list and the second endpoint is corresponding to another communication event on the communication event list, determine that a communication object corresponding to the communication event that is corresponding to the first endpoint is the target communication object and determine that a second default communication manner is the target communication manner.

With reference to the second possible implementation manner of the second aspect or the fifth possible implementation manner of the second aspect, in an eighth possible implementation manner of the second aspect, if the communication object list and the communication event list are displayed by the display unit, the determining unit is specifically configured to: when the first endpoint is corresponding to one communication object on the communication object list and the second endpoint is corresponding to one communication event on the communication event list, determine that the communication object corresponding to the first endpoint is the target communication object and determine that a third default communication manner is the target communication manner, or determine that a communication object corresponding to the communication event that is corresponding to the second endpoint is the target communication object and determine that a fourth default communication manner is the target communication manner.

It can be seen that, with the technical solution provided in the embodiments of the present invention, a user may determine a target communication object and a target communication manner by means of continuous input at a time, so as to rapidly and conveniently initiate communication, thereby reducing operation complexity for the user and improving use efficiency of a terminal device.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a communication object in the prior art;
FIG. 2 is a schematic diagram of a communication manner in the prior art;
FIG. 3 is a schematic diagram of that a communication event list is a communication event in the prior art;
FIG. 4 is a schematic flowchart of a communication initiation method according to an embodiment of the present invention;
FIG. 5 is a schematic diagram according to a specific embodiment of the present invention;
FIG. 6 is a structural block diagram of a terminal device according to an embodiment of the present invention; and
FIG. 7 is a structural block diagram of a terminal device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A terminal device may be termed user equipment (User Equipment, UE) and may be a mobile terminal device (such as a mobile phone or a tablet computer) or a non-mobile terminal device (such as a desktop computer).

FIG. 4 is a schematic flowchart of a communication initiation method according to an embodiment of the present invention, where the method is applied to a terminal device.
401. Detect a dragging path formed when a user touches a display interface of the terminal device and drags a touch point.
402. Determine a target communication object and a target communication manner according to the dragging path.
403. Initiate communication to the target communication object by using the target communication manner.

It can be seen that, with the solution provided in this embodiment of the present invention, a user may rapidly and conveniently initiate communication by means of continuous input at a time, thereby reducing operation complexity for the user and improving use efficiency of a terminal device.

It can be understood that in a process in which the user touches the display interface of the terminal device and drags the touch point to form the dragging path, the user (or a touching tool used by the user, such as a stylus) keeps touching the display interface, that is, the dragging path is a continuous path.

In an implementation manner of the present invention, the dragging path may indicate two or more target objects by using endpoints of the path. In this case, step 402 may be specifically implemented as follows: determining a first endpoint and a second endpoint of the dragging path; and determining the target communication object and the target communication manner according to the first endpoint and the second endpoint.

In another implementation manner of the present invention, the dragging path may indicate two or more items by using another form, for example, the dragging path appears to be a circle or an approximate circle and indicates that an object in an area included in a shape of the circle or the approximate circle is a target object. A person skilled in the art may easily figure out another implementation manner and details are not described in this embodiment of the present invention herein.

It needs to be noted that "first" and "second" applied in this embodiment of the present invention are merely for distinguishing and if not stated otherwise, do not imply a sequence. In addition, there may be one or more first endpoints and second endpoints, and no limitation is set thereto in this embodiment of the present invention. For example, one target communication manner is used to initiate communication to multiple target communication objects at the same time, multiple target communication manners are used to initiate communication to multiple target communication objects at the same time, or multiple target communication manners are used to initiate communication to one target communication object multiple times.

Optionally, in an implementation manner, a communication manner list and at least one of a communication object list and a communication event list may be displayed on the display interface. In another implementation manner, at least one of a communication object list and a communication event list may be displayed on the display interface, and a communication manner list may or may not be displayed.

Specifically, according to different lists displayed on the display interface, the dragging path formed when the user touches the display interface of the terminal device and drags the touch point may pass one or more of the communication object list, the communication event list, and the communication manner list. Therefore, the target communication object may be determined according to the communication object list and/or the communication event list. The target communication manner may be determined according to the communication manner list. For example, the target communication object may be one or more communication objects on the communication object list presented on the display interface. The target communication object may be a communication object corresponding to one communication event on the communication event list presented on the display interface. The target communication object may be a communication object corresponding to each communication event of multiple communication events on the communication event list presented on the display interface. The target communication manner may be one communication manner on the communication manner list.

Optionally, as one embodiment, the detecting a dragging path formed when a user touches a display interface of the terminal device and drags a touch point includes: determining a first endpoint and a second endpoint of the dragging path. In this case, the determining a target communication object and a template communication manner includes: determining the target communication object and the template communication manner according to the first endpoint and the second endpoint. The first endpoint may be a start endpoint at which the user touches the display interface and the second endpoint may be an end endpoint at which the user completes the dragging. Alternatively, the first endpoint may be an end endpoint at which the user completes the dragging and the second endpoint may be a start endpoint at which the user touches the display interface.

Specifically, if the communication object list and the communication manner list are displayed on the display interface, when the first endpoint is corresponding to one communication object on the communication object list and the second endpoint is corresponding to one communication manner on the communication manner list, it may be determined that the communication object corresponding to the first endpoint is the target communication object and determined that the communication manner corresponding to the second endpoint is the target communication manner. If the communication event list and the communication manner list are displayed on the display interface, when the first endpoint is corresponding to one communication event on the communication event list and the second endpoint is corresponding to one communication manner on the communication manner list, it is determined that a communication object corresponding to the communication event that is corresponding to the first endpoint is the target communication object and determined that the communication manner corresponding to the second endpoint is the target communication manner. If the communication object list is displayed on the display interface, when the first endpoint is corresponding to one communication object on the communication object list and the second endpoint is corresponding to another communication object on the communication object list, it is determined that the communication object corresponding to the first endpoint is the target communication object and determined that a first default communication manner is the target communication manner. If the communication event list is displayed on the display interface, when the first endpoint is corresponding to one communication event on the communication event list and the second endpoint is corresponding to another communication event on the communication event list, it is determined that a communication object corresponding to the communication event that is corresponding to the first endpoint is the target communication object and determined that a second default communication manner is the target communication manner. If the communication object list and the communication event list are displayed on the display interface, when the first endpoint is corresponding to one communication object on the communication object list and the second endpoint is corresponding to one communication event on the communication event list, it is determined that the communication object corresponding to the first endpoint is the target communication object and determined that a third default communication manner is the target communication manner, or it is determined that a communication object corresponding to the communication event that is corresponding to the second endpoint is the target communication object and determined that a fourth default communication manner is the target communication manner.

The first default communication manner may be sending an SMS message, an instant communication (such as WeChat) message, an email, or the like. Any one or more default communication manners of the second default communication manner to the fourth default communication manner may be the same as the first default communication manner or be different from the first default communication manner. For example, the first default communication manner may be sending an SMS message and the second default communication manner may be sending an email. For another example, the first default communication manner and the second default communication manner may be sending an SMS message, and the third default communication manner and the fourth default communication manner may be sending an email. A person skilled in the art may understand that specific communication manners of the first default communication manner to the fourth default communication manner may be set according to a requirement.

Further, specific communication content may be preset when the first default communication manner to the fourth default communication manner are used. For example, specific communication content may be determined according to an endpoint of a corresponding dragging path. A person skilled in the art may understand that specific communication content may be flexibly set. The first default communication manner is used as an example. The terminal device may send, to a communication object corresponding to the second endpoint by using an SMS message, contact information (such as a fixed-line telephone number, a mobile phone number, or an email address) of a communication object corresponding to the first endpoint. Alternatively, the terminal device may send one or more SMS messages, which are recently sent by a communication object corresponding to the first endpoint, to a communication object corresponding to the second endpoint.

In conclusion, a person skilled in the art may understand that the first default communication manner to the fourth default communication manner may be set according to a requirement, specific content in the first default communication manner to the fourth default communication manner may be set according to a requirement, and no limitation is set thereto in the present invention.

Optionally, as another embodiment, the detecting a dragging path formed when a user touches a display interface of the terminal device and drags a touch point includes: determining a complete dragging path of the dragging path. The determining a target communication object and a target communication manner includes: determining the target communication object and the target communication manner according to the complete dragging path. The complete dragging path of the dragging path refers to a continuous track that a touch point passes from a time when the user starts touching the display interface of the terminal to a time when the user ends the dragging.

Specifically, if the communication object list and the communication manner list are displayed on the display interface, when objects selected according to the complete dragging path include a communication object on the communication object list and a communication manner on the communication manner list, it is determined that the communication object selected according to the complete dragging path is the target communication object and determined that the communication manner selected according to the complete dragging path is the target communication manner. If the communication event list and the communication manner list are displayed on the display interface, when objects selected according to the complete dragging path include a communication event on the communication event list and a communication manner on the communication manner list, it is determined that a communication object corresponding to the communication event selected according to the complete dragging path is the target communication object and determined that the communication manner selected according to the complete dragging path is the target communication manner. If lists displayed on the display interface include the communication object list, the communication event list, and the communication manner list, when objects selected according to the complete dragging path include a communication object on the communication object list, a communication event on the communication event list, and a communication manner on the communication manner list, it is determined that the communication object selected according to the complete dragging path and a communication object corresponding to the communication event selected according to the complete dragging path are the target communication object and determined that the communication manner selected according to the complete dragging path is the target communication manner.

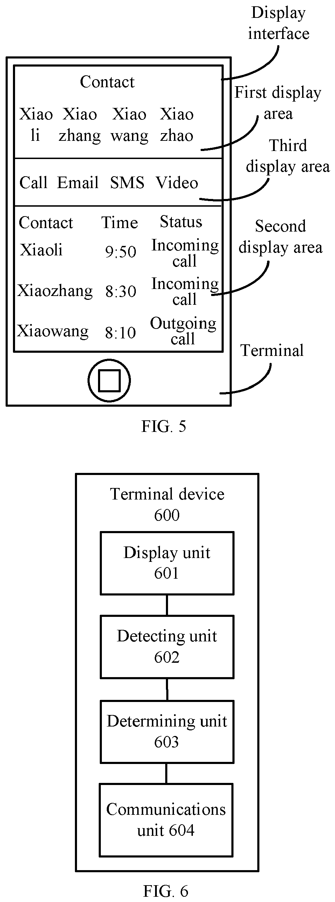

The following further describes the present invention with reference to a schematic diagram shown in FIG. 5. As shown in FIG. 5, a display interface of a terminal device is divided into three different display areas. A first display area presents a communication object list. A second display area presents a communication event list. A third display area presents a communication manner list.

FIG. 5 is a schematic diagram according to a specific embodiment of the present invention. The terminal device shown in FIG. 5 may be a terminal device with a touch display screen, for example, a mobile phone or a tablet computer.

A user may select one communication object from the communication object list by means of touching, where the communication object may be used as a target communication object. The user keeps touching the display screen and drags the selected communication object to one communication manner on the communication manner list, where the communication manner is a communication manner that the user intends to use and the communication manner may be used as a target communication manner. The terminal device initiates a communication process to the target communication object by using the target communication manner. That the user drags a first input object to a second input object by means of touching is a process in which the user touches the display interface of the terminal device and drags a touch point to form a dragging path. The terminal device may determine the target communication object by detecting a start position of the dragging path and determine the target communication manner by detecting an end position of the dragging path. In this case, the start position of the dragging path is a first endpoint of the dragging path and the end position of the dragging path is a second endpoint of the dragging path. For example, when the user intends to make a call to Xiaoli, the user may drag "Xiaoli" in the first display area to "Call" in the third display area. In this way, the terminal device dials a phone number of Xiaoli.

It is easily figured out that, if the first endpoint of the dragging path is the end position of the dragging path and the second endpoint of the dragging path is the start position of the dragging path, the terminal device may initiate a same communication process. For example, the user may select one communication manner from the communication manner list first and then drag the communication manner to one communication object on the communication object list. In this case, the communication manner may be used as the target communication manner and the communication object may be used as the target communication object. In this case, the terminal device may initiate a communication process to the target communication object by using the target communication manner. For example, the user may drag "Call" in the third display area to "Xiaoli" in the first display area. In this way, the terminal device may dial a phone number of Xiaoli. Alternatively, if the first endpoint of the dragging path is the end position of the dragging path and the second endpoint of the dragging path is the start position of the dragging path, the terminal device may initiate different communication processes. For example, if the user drags "Xiaoli" in the first display area to "Call" in the third display area, the terminal device may directly dial a phone number of Xiaoli. If the user drags "Call" in the third display area to "Xiaoli" in the first display area, the terminal device may initiate an international Internet Protocol (Internet Potocol, IP) call to Xiaoli.

The user may select one communication event from the communication event list by means of touching, where a communication object corresponding to the communication event may be used as a target communication object. The user keeps touching the display screen and drags the selected communication event to one communication manner on the communication manner list, where the communication manner is a communication manner that the user intends to use and the communication manner may be used as a target communication manner. The terminal device initiates, by using the target communication manner, a communication process to the communication object corresponding to the communication event. That the user drags, by means of touching, the communication object corresponding to the communication event to the communication manner is a process in which the user touches the display interface of the terminal device and drags a touch point to form a dragging path. The terminal device may determine the target communication object by detecting a start position of the dragging path and determine the target communication manner by detecting an end position of the dragging path. In this case, the start position of the dragging path is a first endpoint of the dragging path and the end position of the dragging path is a second endpoint of the dragging path. For example, when the user intends to make a call to Xiaoli, the user may drag "Xiaoli 9:50 Incoming call" in the second display area to "Call" in the third display area. In this way, the terminal device dials a phone number of Xiaoli.

It is easily figured out that, if the first endpoint of the dragging path is the end position of the dragging path and the second endpoint of the dragging path is the start position of the dragging path, the terminal device may initiate a same communication process. For example, the user may drag "Call" in the third display area to "Xiaoli 9:50 Incoming call" in the second display area. In this way, the terminal device may dial a phone number of Xiaoli. Alternatively, if the first endpoint of the dragging path is the end position of the dragging path and the second endpoint of the dragging path is the start position of the dragging path, the terminal device may initiate different communication processes. For example, if the user drags "Xiaoli 9:50 Incoming call" in the second display area to "Call" in the third display area, the terminal device may directly dial a phone number of Xiaoli. When the user drags "Call" in the third display area to "Xiaoli 9:50 Incoming call" in the second display area, the terminal device initiates an IP call to Xiaoli.

The first endpoint of the dragging path and the second endpoint of the dragging path may be corresponding to two different communication objects on the communication object list. Specifically, the user may select one communication object from the communication object list by means of touching, where the communication object may be considered as a communication object corresponding to the first endpoint. The user keeps touching the display screen and drags the selected communication object to another communication object on the communication object list, where the another communication object may be considered as a communication object corresponding to the second endpoint. In this case, the target communication manner may be a first default communication manner. The first default communication manner may be preset according to a requirement. Optionally, the target communication object may be set to the communication object corresponding to the first endpoint. Alternatively, the target communication object may be set to the communication object corresponding to the second endpoint. For example, the user may drag "Xiaoli" in the first display area to "Xiaowang" in the first display area. In this way, the terminal device may send contact information of Xiaoli to Xiaowang by using an SMS message. It can be seen that, in this example, the target communication object is "Xiaowang" and the first default communication manner is using an SMS message. It can be understood that the first default communication manner may be preset to another communication manner, such as using an email or an instant communication (such as WeChat) message. Specific content of the communication may be other preset content, such as a photo marked with Xiaoli or an SMS message recently sent by Xiaoli.

The first endpoint of the dragging path and the second endpoint of the dragging path may be corresponding to two different communication events on the communication event list. Specifically, the user may select one communication event from the communication event list by means of touching, where the communication event may be considered as a communication event corresponding to the first endpoint. The user keeps touching the display screen and drags the selected communication event to another communication event on the communication event list, where the another communication event may be considered as a communication event corresponding to the second endpoint. In this case, the target communication manner may be a second default communication manner. The second default communication manner may be preset according to a requirement. Optionally, the target communication object may be set to a communication object corresponding to the communication event that is corresponding to the first endpoint. Alternatively, the target communication object may be set to a communication object corresponding to the communication event that is corresponding to the second endpoint. For example, the user may drag "Xiaoli 9:50 Incoming call" in the second display area to "Xiaowang 8:10 Outgoing call" in the second display area. In this way, the terminal device may send contact information of Xiaoli to Xiaowang by using an SMS message. It can be seen that, in this example, the target communication object is "Xiaowang" and the second default communication manner is using an SMS message. It can be understood that the second default communication manner may be preset to another communication manner, such as using an email or an instant communication (such as WeChat) message. Specific content of the communication may be other preset content, such as a photo marked with Xiaoli or an SMS message recently sent by Xiaoli.

The first endpoint of the dragging path may be corresponding to one communication object on the communication object list. In addition, the second endpoint of the dragging path may be corresponding to one communication event on the communication event list. Specifically, the user may select one communication object from the communication object list by means of touching, where the communication object may be considered as the communication object corresponding to the first endpoint. The user keeps touching the display screen and drags the selected communication object to one communication event on the communication event list, where the communication event may be considered as the communication event corresponding to the second endpoint. In this case, the communication object corresponding to the first endpoint may be set as the target communication object. The target communication manner may be a third default communication manner. For example, the user may drag "Xiaoli" in the second display area to "Xiaowang 8:10 Outgoing call" in the second display area. In this way, the terminal device may send contact information of Xiaoli to Xiaowang by using an SMS message. It can be seen that, in this example, the target communication object is "Xiaowang" and the third default communication manner is using an SMS message. It can be understood that the third default communication manner may be preset to another communication manner, such as using an email or an instant communication (such as WeChat) message. Specific content of the communication may be other preset content, such as a photo marked with Xiaoli or an SMS message recently sent by Xiaoli. Alternatively, a communication object corresponding to the communication event that is corresponding to the second endpoint may be set as the target communication object. The template communication manner may be a fourth default communication manner. For example, the user may drag "Xiaoli" in the second display area to "Xiaowang 8:10 Outgoing call" in the second display area. In this way, the terminal device may send contact information of Xiaowang to Xiaoli by using an SMS message. It can be seen that, in this example, the target communication object is "Xiaoli" and the fourth default communication manner is using an SMS message. It can be understood that the fourth default communication manner may be preset to another communication manner, such as using an email or an instant communication (such as WeChat) message. Specific content of the communication may be other preset content, such as a photo marked with Xiaowang or an SMS message recently sent by Xiaowang.

The user may select multiple communication objects from the communication object list by means of touching, where the multiple communication objects may be used as the target communication object. The user keeps touching the display screen and drags the selected multiple communication objects to one communication manner on the communication manner list, where the communication manner is a communication manner that the user intends to use and the communication manner is the target communication manner. The terminal device initiates a communication process to the multiple communication objects, namely, a first input object by using the communication manner. That the user drags, by means of touching, the multiple communication objects to the target communication manner is a process in which the user touches the display interface of the terminal device and drags a touch point to form a dragging path. The terminal device may determine the target communication object and the target communication manner by detecting a complete dragging path of the dragging path. It can be understood that how to determine the target communication object selected according to the complete dragging path of the dragging path may be designed according to a requirement. For example, it may be determined that all communication objects that the complete dragging path of the dragging path passes are the target communication object. For another example, the complete dragging path of the dragging path may specify a range and it may be determined that all communication objects within the range are the target communication object. For example, a sliding track passes "Xiaoli", "Xiaozhang", and "Xiaozhao" in the first display area when keeping touching the display interface, and the sliding track further passes "SMS" in the second display area when keeping touching the display interface. In this case, the user may edit an SMS message and send an edited SMS message to Xiaoli, Xiaozhang, and Xiaozhao at the same time.

The user may select multiple communication events from the communication event list by means of touching, where a communication object corresponding to each communication event of the multiple communication events may be used as the target communication object. The user keeps touching the display screen and drags the selected multiple communication events to one communication manner on the communication manner list, where the communication manner is a communication manner that the user intends to use and the communication manner is the target communication manner. The terminal device initiates, by using the communication manner, a communication process to the communication objects corresponding to the multiple communication events. That the user drags, by means of touching, the multiple communication events to the target communication manner is a process in which the user touches the display interface of the terminal device and drags a touch point to form a dragging path. The terminal device may determine the multiple communication events and the template communication manner by detecting a complete dragging path of the dragging path. It can be understood that how to determine the target communication object selected according to the complete dragging path of the dragging path may be designed according to a requirement. For example, it may be determined that a communication object corresponding to each communication event of all communication events that the complete dragging path of the dragging path passes is the target communication object. For another example, the complete dragging path of the dragging path may specify a range and it may be determined that a communication object corresponding to each communication event of all communication events within the range is the target communication object. For example, a sliding track passes "Xiaoli 9:50 Incoming call" and "Xiaowang 8:30 Incoming call" in the second display area when keeping touching the display interface, and the sliding track further passes "SMS" in the second display area when keeping touching the display interface. In this case, the user may edit an SMS message and send an edited SMS message to Xiaoli and Xiaowang at the same time.

The user may select, by means of touching, one or more communication events from the communication event list and one or more communication objects from the communication object list, where the one or more communication objects and a communication object corresponding to each communication event of the one or more communication events may be used as the target communication object. The user keeps touching the display screen and drags the selected one or more communication events and one or more communication objects to one communication manner on the communication manner list, where the communication manner is a communication manner that the user intends to use and the communication manner is the target communication manner. The terminal device initiates, by using the target communication manner, a communication process to the one or more communication objects and the communication object corresponding to each of the one or more communication events. That the user drags, by means of touching, the one or more communication events on the communication event list and the one or more communication objects on the communication object list to the target communication manner is a process in which the user touches the display interface of the terminal device and drags a touch point to form a dragging path. The terminal device may determine a first input object and a second input object by detecting a complete dragging path of the dragging path. It can be understood that how to determine the target communication object selected according to the complete dragging path of the dragging path may be designed according to a requirement. For example, it may be determined that a communication object corresponding to each communication event of all communication events that the complete dragging path of the dragging path passes and all communication objects that the complete dragging path of the dragging path passes, are the target communication object. For another example, the complete dragging path of the dragging path may specify a range and it may be determined that a communication object corresponding to each communication event of all communication events within the range and all communication objects within the range are the target communication object. For example, a sliding track passes "Xiaoli 9:50 Incoming call" and "Xiaowang 8:30 Incoming call" in the second display area when keeping touching the display interface, the user further passes "Xiaozhao" in the first display area when keeping touching the display interface, and the sliding track further passes "SMS" in the second display area when keeping touching the display interface. In this case, the user may edit an SMS message and send an edited SMS message to Xiaoli, Xiaowang, and Xiaozhao at the same time.

Optionally, as another embodiment, another preset process may be initiated according to the dragging path. For example, as shown in FIG. 5, if the user drags "Call" in the third display area to "Xiaoli" in the first display area, the terminal device may drag Xiaoli to a blacklist to bar an incoming call from Xiaoli. Alternatively, If a communication object who makes an incoming call displayed in the second display area is not on the communication object list, in this case, if "Call" in the third display area is dragged to the incoming call that is in the second display area and that is not on the communication object list, the communication object corresponding to the incoming call may be added to the communication object list for storage.

It can be understood that FIG. 5 is merely a specific embodiment provided for a better understanding of the present invention. In addition to displaying the communication object list, the communication event list, and the communication manner list at the same time, the terminal device may display only the communication object list and the communication event list at the same time, display only the communication object list and the communication manner list at the same time, or display only the communication event list and the communication manner list at the same time. According to the foregoing operation manner, the terminal device may display only the communication object list or display only the communication event list.

It can be seen that, with the solution provided in this embodiment of the present invention, a user may rapidly and conveniently initiate communication by means of continuous input at a time, thereby reducing operation complexity for the user and improving use efficiency of a terminal device. Further, based on the basic technical solution of the present invention, the present invention further provides possible operation manners of several communication functions, thereby providing convenient and rapid initiation methods for various possible communication operations of the user.

FIG. 6 is a terminal device according to an embodiment of the present invention. The terminal device may perform all steps shown in FIG. 4. As shown in FIG. 6, the terminal device 600 includes a display unit 601, a detecting unit 602, a determining unit 603, and a communication unit 604.

The display unit 601 is configured to present a display interface.

The detecting unit 602 is configured to detect a dragging path formed when a user touches the display interface and drags a touch point.

The determining unit 603 is configured to determine a target communication object and a target communication manner according to the dragging path.

The communication unit 604 is configured to initiate communication to the target communication object by using the target communication manner.

It can be seen that, with the terminal device provided in this embodiment of the present invention, a user may rapidly and conveniently initiate communication by means of continuous input at a time, thereby reducing operation complexity for the user and improving use efficiency of the terminal device.

It can be understood that in a process in which the user touches the display interface of the terminal device and drags the touch point to form the dragging path, the user (or a touching tool used by the user, such as a stylus) keeps touching the display interface.

In an implementation manner of the present invention, the dragging path may indicate two or more target objects by using endpoints of the path. In this case, the determining unit 603 is specifically configured to: determine a first endpoint and a second endpoint of the dragging path; and determine the target communication object and the target communication manner according to the first endpoint and the second endpoint.

In another implementation manner of the present invention, the dragging path may indicate two or more items by using another form, for example, the dragging path appears to be a circle or an approximate circle and indicates that an object in an area included in a shape of the circle or the approximate circle is a target object. A person skilled in the art may easily figure out another implementation manner and details are not described in this embodiment of the present invention herein.

Optionally, in one implementation manner, the display unit 601 may be specifically configured to display a communication manner list and at least one of a communication object list and a communication event list on the display interface. In another implementation manner, the display unit 601 may be specifically configured to display at least one of a communication object list and a communication event list on the display interface, and may or may not display a communication manner list.

Specifically, according to different lists displayed on the display interface, the dragging path formed when the user touches the display interface of the terminal device and drags the touch point may pass one or more of the communication object list, the communication event list, and the communication manner list. Therefore, the target communication object may be determined according to the communication object list and/or the communication event list. The target communication manner may be determined according to the communication manner list. For example, the target communication object may be one or more communication objects on the communication object list presented on the display interface. The target communication object may be a communication object corresponding to one communication event on the communication event list presented on the display interface. The target communication object may be a communication object corresponding to each communication event of multiple communication events on the communication event list presented on the display interface. The target communication manner may be one communication manner on the communication manner list.

Optionally, as one embodiment, the determining unit 603 is specifically configured to determine a first endpoint and a second endpoint of the dragging path and determine the target communication object and the target communication manner according to the first endpoint and the second endpoint.

Specifically, if the communication object list and the communication manner list are displayed by the display unit 601, the determining unit 603 is specifically configured to: when the first endpoint is corresponding to one communication object on the communication object list and the second endpoint is corresponding to one communication manner on the communication manner list, determine that the communication object corresponding to the first endpoint is the target communication object and determine that the communication manner corresponding to the second endpoint is the target communication manner. If the communication event list and the communication manner list are displayed by the display unit 601, the determining unit 603 is specifically configured to: when the first endpoint is corresponding to one communication event on the communication event list and the second endpoint is corresponding to one communication manner on the communication manner list, determine that a communication object corresponding to the communication event that is corresponding to the first endpoint is the target communication object and determine that the communication manner corresponding to the second endpoint is the target communication manner. If the communication object list is displayed by the display unit 601, the determining unit 603 is specifically configured to: when the first endpoint is corresponding to one communication object on the communication object list and the second endpoint is corresponding to another communication object on the communication object list, determine that the communication object corresponding to the first endpoint is the target communication object and determine that a first default communication manner is the target communication manner. If the communication event list is displayed by the display unit 601, the determining unit 603 is specifically configured to: when the first endpoint is corresponding to one communication event on the communication event list and the second endpoint is corresponding to another communication event on the communication event list, determine that a communication object corresponding to the communication event that is corresponding to the first endpoint is the target communication object and determine that a second default communication manner is the target communication manner. If the communication object list and the communication event list are displayed by the display unit 601, the determining unit 603 is specifically configured to: when the first endpoint is corresponding to one communication object on the communication object list and the second endpoint is corresponding to one communication event on the communication event list, determine that the communication object corresponding to the first endpoint is the target communication object and determine that a third default communication manner is the target communication manner, or determine that a communication object corresponding to the communication event that is corresponding to the second endpoint is the target communication object and determine that a fourth default communication manner is the target communication manner.

Optionally, as another embodiment, the detecting unit 602 is specifically configured to determine a complete dragging path of the dragging path. The determining unit 603 is specifically configured to determine the target communication object and the target communication manner according to the complete dragging path.

Specifically, if the communication object list and the communication manner list are displayed by the display unit 601, the determining unit 603 is specifically configured to: when objects selected according to the complete dragging path include a communication object on the communication object list and a communication manner on the communication manner list, determine that the communication object selected according to the complete dragging path is the target communication object and determine that the communication manner selected according to the complete dragging path is the target communication manner. If the communication event list and the communication manner list are displayed by the display unit 601, the determining unit 603 is specifically configured to: when objects selected according to the complete dragging path include a communication event on the communication event list and a communication manner on the communication manner list, determine that a communication object corresponding to the communication event selected according to the complete dragging path is the target communication object and determine that the communication manner selected according to the complete dragging path is the target communication manner. If the communication event list is displayed by the display unit 601, the communication object list, and the communication manner list, the determining unit 603 is specifically configured to: when objects selected according to the complete dragging path include a communication object on the communication object list, a communication event on the communication event list, and a communication manner on the communication manner list, determine that the communication object selected according to the complete dragging path and a communication object corresponding to the communication event selected according to the complete dragging path are the target communication object and determine that the communication manner selected according to the complete dragging path is the target communication manner.

It can be seen that, with the terminal device provided in this embodiment of the present invention, a user may rapidly and conveniently initiate communication by means of continuous input at a time, thereby reducing operation complexity for the user and improving use efficiency of the terminal device. Further, based on the basic technical solution of the present invention, the present invention further provides possible operation manners of several communication functions, thereby providing convenient and rapid initiation methods for various possible communication operations of the user.

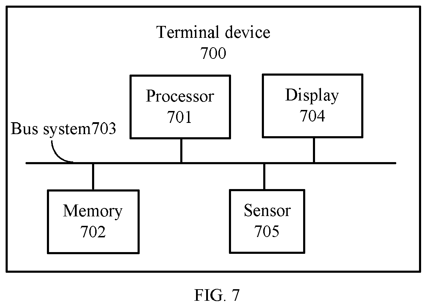

FIG. 7 is a terminal device according to an embodiment of the present invention. The terminal device may perform all steps shown in FIG. 4. As shown in FIG. 7, the terminal device 700 includes a processor 701 and a memory 702.

The terminal device 700 may further include a display 704 and a sensor 705. A combination of the display and the sensor may be termed a touch display screen.

All components of the terminal device 700 are coupled together by using a bus system 703, where the bus system 703 further includes a power supply bus, a control bus, and a status signal bus in addition to a data bus. However, for a clear description, all types of buses are marked as the bus system 703 in FIG. 7.

The method disclosed in the embodiments of the present invention may be applied to the processor 701 or implemented by the processor 701. The processor 701 may be an integrated circuit chip with a signal processing capability. In an implementation process, the steps of the foregoing method may be completed by an integrated logic circuit in a form of hardware in the processor 701 or by an instruction in a form of software. The foregoing processor 701 may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor 701 may implement or execute methods, steps, and logical block diagrams that are disclosed in the embodiments of the present invention. The general purpose processor may be a microprocessor or the processor maybe any conventional processor and the like. Steps of the method disclosed with reference to the embodiments of the present invention may be directly executed and completed by means of hardware of a decoding processor, or may be executed and completed by using a combination of hardware and software modules in a decoding processor. The software module may be located in a mature storage medium in the field, such as a random access memory (Random Access Memory, RAM), a flash memory, a read-only memory (Read-Only Memory, ROM), a programmable read-only memory, an electrically-erasable programmable memory, or a register. The storage medium is located in the memory 702, and the processor 701 reads an instruction from the memory 702 to perform the steps in the foregoing method in conjunction with the hardware of the processor 701.

The display 704 is configured to present a display interface.

The sensor 705 is configured to detect a dragging path formed when a user touches the display interface and drags a touch point.

The processor 701 is configured to determine a target communication object and a target communication manner according to the dragging path and initiate communication to the target communication object by using the target communication manner.

It can be seen that, with the terminal device provided in this embodiment of the present invention, a user may rapidly and conveniently initiate communication by means of continuous input at a time, thereby reducing operation complexity for the user and improving use efficiency of the terminal device.

It can be understood that in a process in which the user touches the display interface of the terminal device and drags the touch point to form the dragging path, the user (or a touching tool used by the user, such as a stylus) keeps touching the display interface.

In an implementation manner of the present invention, the dragging path may indicate two or more target objects by using endpoints of the path. In this case, the processor 701 is specifically configured to: determine a first endpoint and a second endpoint of the dragging path; and determine the target communication object and the target communication manner according to the first endpoint and the second endpoint.

In another implementation manner of the present invention, the dragging path may indicate two or more target objects by using another form, for example, the dragging path appears to be a circle or an approximate circle and indicates that an object in an area included in a shape of the circle or the approximate circle is a target object. A person skilled in the art may easily figure out another implementation manner and details are not described in this embodiment of the present invention herein.

Optionally, in one implementation manner, the display 704 may be specifically configured to display a communication manner list and at least one of a communication object list and a communication event list on the display interface. In another implementation manner, the display 704 may be specifically configured to display at least one of a communication object list and a communication event list on the display interface.

Specifically, according to different lists displayed on the display interface, the dragging path formed when the user touches the display interface of the terminal device and drags the touch point may pass one or more of the communication object list, the communication event list, and the communication manner list. Therefore, the target communication object may be determined according to the communication object list and/or the communication event list. The target communication manner may be determined according to the communication manner list. For example, the target communication object may be one or more communication objects on the communication object list presented on the display interface. The target communication object may be a communication object corresponding to one communication event on the communication event list presented on the display interface. The target communication object may be a communication object corresponding to each communication event of multiple communication events on the communication event list presented on the display interface. The target communication manner may be one communication manner on the communication manner list.

Optionally, as one embodiment, the processor 701 is specifically configured to determine a first endpoint and a second endpoint of the dragging path and determine the target communication object and the target communication manner according to the first endpoint and the second endpoint.

Specifically, if the communication object list and the communication manner list are displayed by the display 704, the processor 701 is specifically configured to: when the first endpoint is corresponding to one communication object on the communication object list and the second endpoint is corresponding to one communication manner on the communication manner list, determine that the communication object corresponding to the first endpoint is the target communication object and determine that the communication manner corresponding to the second endpoint is the target communication manner. If the communication event list and the communication manner list are displayed by the display 704, the processor 701 is specifically configured to: when the first endpoint is corresponding to one communication event on the communication event list and the second endpoint is corresponding to one communication manner on the communication manner list, determine that a communication object corresponding to the communication event that is corresponding to the first endpoint is the target communication object and determine that the communication manner corresponding to the second endpoint is the target communication manner. If the communication object list is displayed by the display 704, the processor 701 is specifically configured to: when the first endpoint is corresponding to one communication object on the communication object list and the second endpoint is corresponding to another communication object on the communication object list, determine that the communication object corresponding to the first endpoint is the target communication object and determine that a first default communication manner is the target communication manner. If the communication event list is displayed by the display 704, the processor 701 is specifically configured to: when the first endpoint is corresponding to one communication event on the communication event list and the second endpoint is corresponding to another communication event on the communication event list, determine that a communication object corresponding to the communication event that is corresponding to the first endpoint is the target communication object and determine that a second default communication manner is the target communication manner. If the communication object list and the communication event list are displayed by the display 704, the processor 701 is specifically configured to: when the first endpoint is corresponding to one communication object on the communication object list and the second endpoint is corresponding to one communication event on the communication event list, determine that the communication object corresponding to the first endpoint is the target communication object and determine that a third default communication manner is the target communication manner, or determine that a communication object corresponding to the communication event that is corresponding to the second endpoint is the target communication object and determine that a fourth default communication manner is the target communication manner.

Optionally, as another embodiment, the sensor 705 is specifically configured to determine a complete dragging path of the dragging path. The processor 701 is specifically configured to determine the target communication object and the target communication manner according to the complete dragging path.

Specifically, if the communication object list and the communication manner list are displayed by the display 704, the processor 701 is specifically configured to: when objects selected according to the complete dragging path include a communication object on the communication object list and a communication manner on the communication manner list, determine that the communication object selected according to the complete dragging path is the target communication object and determine that the communication manner selected according to the complete dragging path is the target communication manner. If the communication event list and the communication manner list are displayed by the display 704, the processor 701 is specifically configured to: when objects selected according to the complete dragging path include a communication event on the communication event list and a communication manner on the communication manner list, determine that a communication object corresponding to the communication event selected according to the complete dragging path is the target communication object and determine that the communication manner selected according to the complete dragging path is the target communication manner. If the communication event list is displayed by the display 704, the communication object list, and the communication manner list, the processor 701 is specifically configured to: when objects selected according to the complete dragging path include a communication object on the communication object list, a communication event on the communication event list, and a communication manner on the communication manner list, determine that the communication object selected according to the complete dragging path and a communication object corresponding to the communication event selected according to the complete dragging path are the target communication object and determine that the communication manner selected according to the complete dragging path is the target communication manner.

In conclusion, with the terminal device provided in this embodiment of the present invention, a user may rapidly and conveniently initiate communication by means of continuous input at a time, thereby reducing operation complexity for the user and improving use efficiency of the terminal device. Further, based on the basic technical solution of the present invention, the present invention further provides possible operation manners of several communication functions, thereby providing convenient and rapid initiation methods for various possible communication operations of the user.

It needs to be noted that words such as "first", "second", "third", and "fourth" that are used in the embodiments of the present invention are merely for distinguishing concepts modified by them and if not stated otherwise, do not imply a sequence.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication initiation method, wherein the method is applied to a terminal device and the method comprises:
detecting a dragging path formed when a user touches a display interface of the terminal device and drags a touch point;
determining a target communication object and a target communication manner according to the dragging path; and
initiating communication to the target communication object by using the target communication manner.

2. The method according to claim 1, wherein:
the determining a target communication object and a target communication manner according to the dragging path comprises:
determining a first endpoint and a second endpoint of the dragging path; and
determining the target communication object and the target communication manner according to the first endpoint and the second endpoint.

3. The method according to claim 2, wherein a communication manner list and at least one of a communication object list and a communication event list are displayed on the display interface.

4. The method according to claim 3, wherein if the communication object list and the communication manner list are displayed on the display interface, the determining the target communication object and the target communication manner according to the first endpoint and the second endpoint comprises:
when the first endpoint is corresponding to one communication object on the communication object list and the second endpoint is corresponding to one communication manner on the communication manner list, determining that the communication object corresponding to the first endpoint is the target communication object and determining that the communication manner corresponding to the second endpoint is the target communication manner.

5. The method according to claim 3, wherein if the communication event list and the communication manner list are displayed on the display interface, the determining the target communication object and the target communication manner according to the first endpoint and the second endpoint comprises:
when the first endpoint is corresponding to one communication event on the communication event list and the second endpoint is corresponding to one communication manner on the communication manner list, determining that a communication object corresponding to the communication event that is corresponding to the first endpoint is the target communication object and determining that the communication manner corresponding to the second endpoint is the target communication manner.

6. The method according to claim 2, wherein at least one of a communication object list and a communication event list is displayed on the display interface.

7. The method according to claim 3 or 6, wherein if the communication object list is displayed on the display interface, the determining the target communication object and the target communication manner according to the first endpoint and the second endpoint comprises:
when the first endpoint is corresponding to one communication object on the communication object list and the second endpoint is corresponding to another communication object on the communication object list, determining that the communication object corresponding to the first endpoint is the target communication object and determining that a first default communication manner is the target communication manner.

8. The method according to claim 3 or 6, wherein if the communication event list is displayed on the display interface, the determining the target communication object and the target communication manner according to the first endpoint and the second endpoint comprises:
when the first endpoint is corresponding to one communication event on the communication event list and the second endpoint is corresponding to another communication event on the communication event list, determining that a communication object corresponding to the communication event that is corresponding to the first endpoint is the target communication object and determining that a second default communication manner is the target communication manner.

9. The method according to claim 3 or 6, wherein if lists displayed on the display interface comprise the communication object list and the communication event list, the determining the target communication object and the target communication manner according to the first endpoint and the second endpoint comprises:
when the first endpoint is corresponding to one communication object on the communication object list and the second endpoint is corresponding to one communication event on the communication event list, determining that the communication object corresponding to the first endpoint is the target communication object and determining that a third default communication manner is the target communication manner, or determining that a communication object corresponding to the communication event that is corresponding to the second endpoint is the target communication object and determining that a fourth default communication manner is the target communication manner.

10. A terminal device, wherein the terminal device comprises:
a display unit, configured to present a display interface;
a detecting unit, configured to detect a dragging path formed when a user touches the display interface and drags a touch point;
a determining unit, configured to determine a target communication object and a target communication manner according to the dragging path; and
a communication unit, configured to initiate communication to the target communication object by using the target communication manner.

11. The terminal device according to claim 10, wherein:
the determining unit is specifically configured to determine a first endpoint and a second endpoint of the dragging path and determine the target communication object and the target communication manner according to the first endpoint and the second endpoint.

12. The terminal device according to claim 11, wherein the display unit is specifically configured to display a communication manner list and at least one of a communication object list and a communication event list on the display interface.

13. The terminal device according to claim 12, wherein if the communication object list and the communication manner list are displayed by the display unit,
the determining unit is specifically configured to: when the first endpoint is corresponding to one communication object on the communication object list and the second endpoint is corresponding to one communication manner on the communication manner list, determine that the communication object corresponding to the first endpoint is the target communication object and determine that the communication manner corresponding to the second endpoint is the target communication manner.

14. The terminal device according to claim 12, wherein if the communication event list and the communication manner list are displayed by the display unit,
the determining unit is specifically configured to: when the first endpoint is corresponding to one communication event on the communication event list and the second endpoint is corresponding to one communication manner on the communication manner list, determine that a communication object corresponding to the communication event that is corresponding to the first endpoint is the target communication object and determine that the communication manner corresponding to the second endpoint is the target communication manner.

15. The terminal device according to claim 11, wherein the display unit is specifically configured to display at least one of a communication object list and a communication event list on the display interface.

16. The terminal device according to claim 12 or 15, wherein if a list displayed by the display unit comprises the communication object list,
the determining unit is specifically configured to: when the first endpoint is corresponding to one communication object on the communication object list and the second endpoint is corresponding to another communication object on the communication object list, determine that the communication object corresponding to the first endpoint is the target communication object and determine that a first default communication manner is the target communication manner.

17. The terminal device according to claim 12 or 15, wherein if the communication event list is displayed by the display unit,
the determining unit is specifically configured to: when the first endpoint is corresponding to one communication event on the communication event list and the second endpoint is corresponding to another communication event on the communication event list, determine that a communication object corresponding to the communication event that is corresponding to the first endpoint is the target communication object and determine that a second default communication manner is the target communication manner.

18. The terminal device according to claim 12 or 15, wherein if the communication object list and the communication event list are displayed by the display unit,
the determining unit is specifically configured to: when the first endpoint is corresponding to one communication object on the communication object list and the second endpoint is corresponding to one communication event on the communication event list, determine that the communication object corresponding to the first endpoint is the target communication object and determine that a third default communication manner is the target communication manner, or determine that a communication object corresponding to the communication event that is corresponding to the second endpoint is the target communication object and determine that a fourth default communication manner is the target communication manner.
